(19)

Europäisches
Patentamt
European
Patent Office
Office européen
des brevets

(11) **EP 2 725 527 A1**

(12) **EUROPEAN PATENT APPLICATION**
published in accordance with Art. 153(4) EPC

(43) Date of publication:
**30.04.2014 Bulletin 2014/18**

(21) Application number: **12803758.7**

(22) Date of filing: **22.06.2012**

(51) Int Cl.:
***G06Q 10/00*** *(2012.01)*     ***G06Q 50/06*** *(2012.01)*
***G06Q 50/10*** *(2012.01)*

(86) International application number:
**PCT/JP2012/066086**

(87) International publication number:
**WO 2013/002155 (03.01.2013 Gazette 2013/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.06.2011   JP 2011142209**

(71) Applicant: **NEC Corporation
Tokyo 108-8001 (JP)**

(72) Inventors:
 • **TANAKA Rie
   Tokyo 108-8001 (JP)**
 • **DOI Shinichi
   Tokyo 108-8001 (JP)**
 • **KONISHI Taku
   Tokyo 108-8001 (JP)**
 • **ITAYA Satoko
   Tokyo 108-8001 (JP)**
 • **YOSHINAGA Naoki
   Tokyo 108-8001 (JP)**

(74) Representative: **Reeve, Nicholas Edward
   Reddie & Grose LLP
   16 Theobalds Road
   London WC1X 8PL (GB)**

(54) **ACTION SUGGESTION DEVICE, ACTION SUGGESTION SYSTEM, ACTION SUGGESTION METHOD, AND PROGRAM**

(57)    A remaining power acquisition unit (12) of an action suggestion device (1) acquires an amount of power remaining in a battery cell (2). A forecast information acquisition unit (11) acquires, over the Internet, forecast information including at least one of the weather forecast in a region where a power generator that supplies power to the battery cell (2) is located and schedule information on planned blackouts. A suggestion information generator (14) extracts an action satisfying a predetermined evaluation criterion which is based on the forecast information and the amount of remaining power from an action list indicating possible actions to be taken by a user and stored in an action list storage (13), and generates suggestion information showing the extracted action. The suggestion information generator (14) makes a display (15) display the suggestion information.

**FIG.2**

## Description

Technical Field

The present invention relates to an action suggestion device, an action suggestion system, an action suggestion method, and a program.

Background Art

There is a technique for suggesting actions which are estimated to be appropriate according to a condition to a user. According to a technique disclosed in Patent Literature 1, for example, a user previously inputs a plan of actions that the user should take, and writes results of taking the actions on a journal. The user receives and displays another user's comments on the actions.

Patent Literature 2 discloses a system that estimates the influence of a set schedule on the health of a user, and provides an advice corresponding to the estimation result.

Patent Literature 3 discloses an electronic computer that calculates a social network structural model designed in consideration of the influence of communications on a social network on consumers' consumption actions. A user can select an adequate action based on the calculated model.

Patent Literature 4 discloses an action predicting system that predicts the next action (moving destination or the like) based on the history of actions of a user. Patent Literature 4 describes that shops and goods are suggested to the user based on the predicted actions.

A system disclosed in Patent Literature 5 extracts, from the database for a group sharing a common target such as diet, information on the state of the whole group and the present conditions of other members who have registered information similar to that of the user. The system then provides the user with the extracted information to promote actions corresponding to the target.

Citation List

Patent Literature 1: Unexamined Japanese Patent Application Kokai Publication No. 2008-217621
Patent Literature 2: Unexamined Japanese Patent Application Kokai Publication No. H10-305016
Patent Literature 3: Unexamined Japanese Patent Application Kokai Publication No. 2009-116844
Patent Literature 4: Unexamined Japanese Patent Application Kokai Publication No. 2010-146276
Patent Literature 4: Unexamined Japanese Patent Application Kokai Publication No. 2010-204883

Summary of Invention

Technical Problem

Users who store power generated by home power generators, such as a solar panel, into battery cells and live off this power, and users who need power for medical devices even upon occurrence of power failure are likely to be very interested in the efficient use of power. Such users cannot be effectively motivated unless actions based on the present and future power conditions are suggested to them. Since the information provided by the techniques disclosed in Patent Literatures 1 to 5 is not based on power conditions, the techniques have a problem that actions cannot be effectively suggested to a user who has such a tendency.

Accordingly, it is an object of the invention to provide an action suggestion device, an action suggestion system, an action suggestion method, and a program that are able to effectively suggest actions to users who are very interested in efficient use of power.

Solution to Problem

An action suggestion device according to a first aspect of the invention includes:

remaining power acquisition means that acquires an amount of remaining power in a battery cell storing power supplied by a power generator;
forecast acquisition means that acquires forecast information on an amount of power to be supplied to the battery cell by the power generator in a predetermined forecast period;

storage means that stores an action list recording actions of a user and information on power consumption originating from the actions in association with each other;

extraction means that extracts, from the action list, a combination of actions whose information on the power consumption satisfies a predetermined criterion which is based on the forecast information and the amount of remaining power as a suggested action in the forecast period and a pre-forecast period thereto;

generation means that generates suggestion information including the combination of actions extracted by the extraction means; and

output means that outputs the suggestion information generated by the generation means.

An action suggestion system according to a second aspect of the invention includes:

a power generator that supplies generated power to a battery cell;
the battery cell that stores the power generated by the power generator; and
an action suggestion device including

remaining power acquisition means that acquires an amount of remaining power in the battery cell,
forecast acquisition means that acquires forecast information on an amount of power to be supplied to the battery cell by the power generator in a predetermined forecast period,
storage means that stores an action list recording actions of a user and information on power consumption originating from the actions in association with each other,
extraction means that extracts, from the action list, a combination of actions whose information on the power consumption satisfies a predetermined criterion which is based on the forecast information and the amount of remaining power as a suggested action in the forecast period and a pre-forecast period thereto,
generation means that generates suggestion information including the combination of actions extracted by the extraction means, and
output means that outputs the suggestion information generated by the generation means.

According to a third aspect of the invention, an action suggestion method is provided for suggesting an action to a user, the method including the steps of:

acquiring an amount of remaining power in a battery cell storing power supplied by a power generator;
acquiring forecast information on an amount of power to be supplied to the battery cell by the power generator in a predetermined forecast period;
storing an action list recording actions of a user and information on power consumption originating from the actions in association with each other;
extracting, from the action list, a combination of actions whose information on power consumption satisfies a predetermined criterion which is based on the forecast information and the amount of remaining power as a suggested action in the forecast period and a pre-forecast period thereto;
generating suggestion information including the extracted combination of actions; and
outputting the generated suggestion information.

A program according to a fourth aspect of the invention allows a computer to function as:

remaining power acquisition means that acquires an amount of remaining power in a battery cell storing power supplied by a power generator;
forecast acquisition means that acquires forecast information on an amount of power to be supplied to the battery cell by the power generator in a predetermined forecast period;
storage means that stores an action list recording actions of a user and information on power consumption originating from the actions in association with each other;
extraction means that extracts, from the action list, a combination of actions whose information on the power consumption satisfies a predetermined criterion which is based on the forecast information and the amount of remaining power as a suggested action in the forecast period and a pre-forecast period thereto;
generation means that generates suggestion information including the combination of actions extracted by the extraction means; and
output means that outputs the suggestion information generated by the generation means.

Advantageous Effects of Invention

The invention can effectively suggest actions to users who are very interested in efficient use of power.

Brief Description of Drawings

FIG. 1 is a diagram showing an example of the configuration of an action suggestion system according to a first embodiment;
FIG. 2 is a block diagram showing an example of the functional configuration of an action suggestion device according to the first embodiment;
FIG. 3 is a diagram showing an example of forecast information, the value of remaining power, and an action list according to the first embodiment;
FIG. 4 is a flowchart illustrating an action suggesting routine according to the first embodiment;
FIG. 5 is a block diagram showing an example of the functional configuration of an action suggestion device according to a second embodiment;
FIG. 6 is a diagram showing an example of forecast information, the value of remaining power, and an action list according to the second embodiment;
FIG. 7 is a flowchart illustrating an action suggesting routine according to the second embodiment;
FIG. 8 is a block diagram showing an example of the functional configuration of an action suggestion device according to a third embodiment;
FIG. 9 is a diagram showing an example of forecast information, the value of remaining power, an action list, and user information according to the third embodiment;
FIG. 10 is a flowchart illustrating an action suggesting routine according to the third embodiment; and

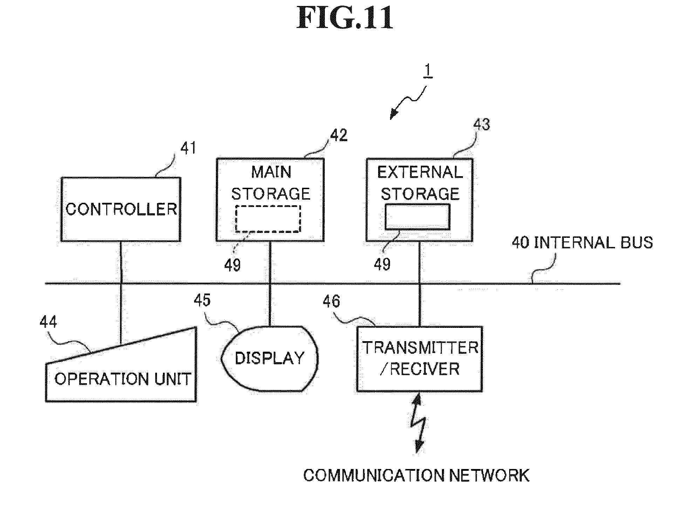

FIG. 11 is a block diagram showing an example of the hardware configuration of an action suggestion device according to the embodiments.

Description of Embodiments

Embodiments for working out the invention are described hereinafter referring to the accompanying drawings. Same reference symbols are given to the same or equivalent parts throughout the diagrams.

(First Embodiment)

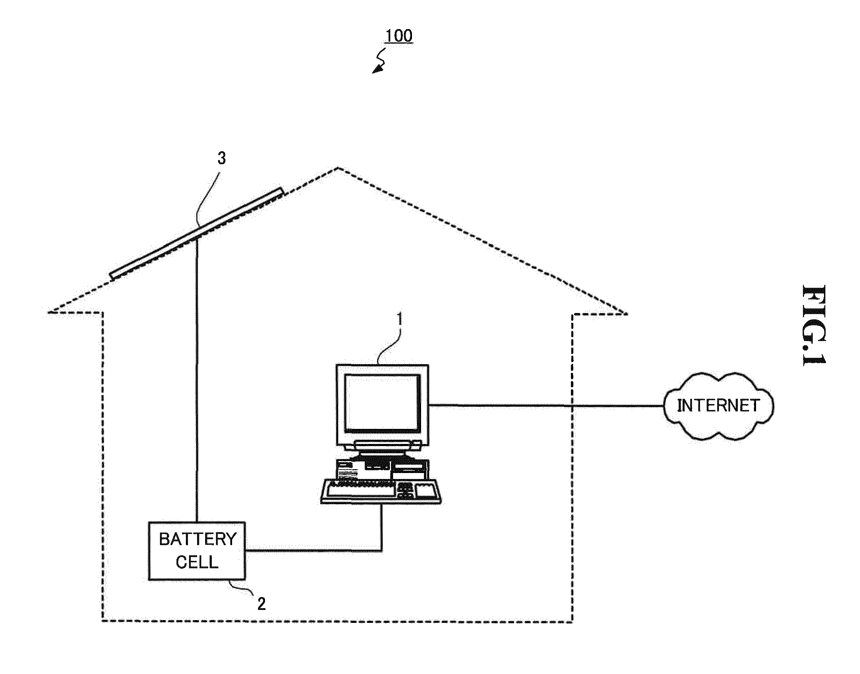

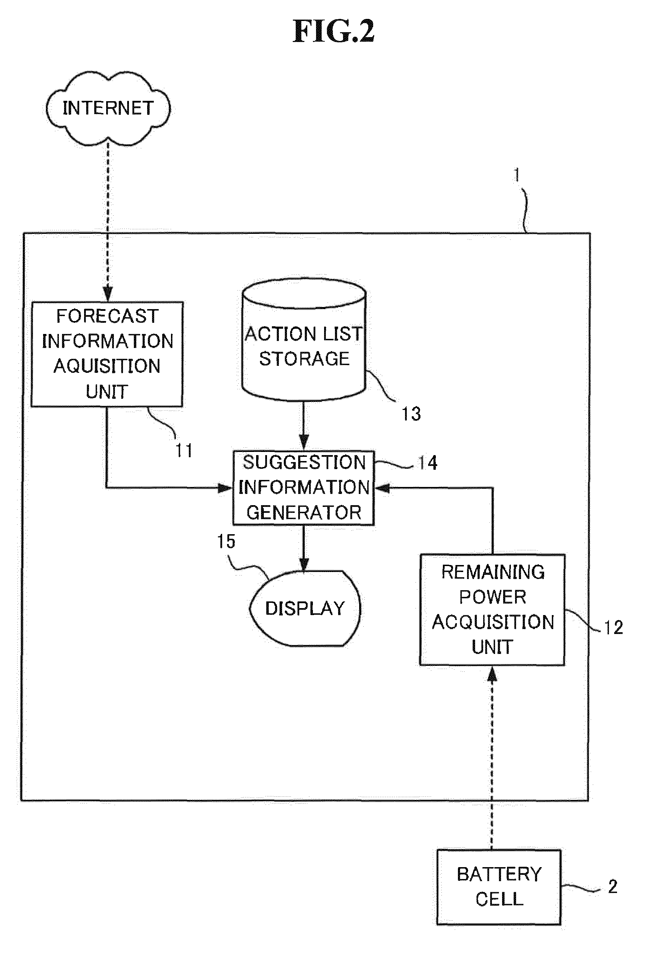

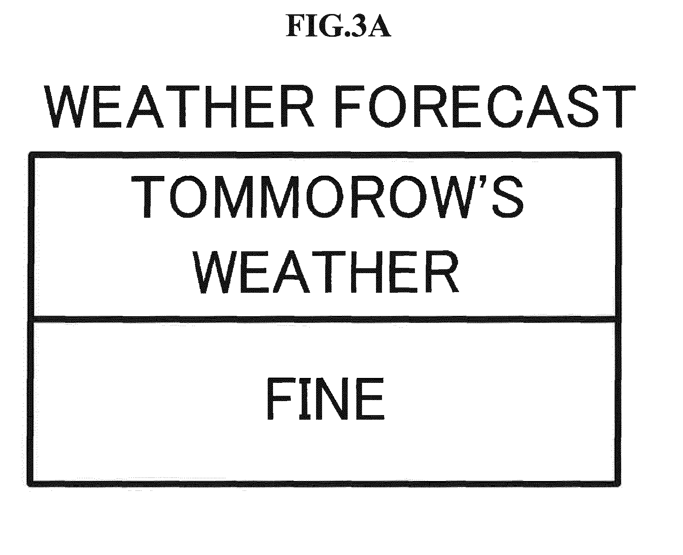

As shown in FIG. 1, an action suggestion system 100 according to a first embodiment of the invention includes an action suggestion device 1, a battery cell 2, and a power generator 3. The power generator 3 is a home power generator such as a small-sized aerogenerator or small-sized gasoline engine generator. According to the embodiment, the power generator 3 is a solar panel mounted on the roof of a user's house. The power generator 3 supplies the battery cell 2 with generated power.
The battery cell 2, which includes a lithium ion battery, a lead battery, a fuel cell or the like, stores power supplied from the power generator 3.
The battery cell 2 includes a remaining power indicator that measures remaining power. It is to be noted that according to the embodiment, the battery cell 2 includes a battery cell to be mounted on an electric vehicle as well as a battery cell to be installed in a user's house as shown in FIG. 1.
As shown in FIG. 2, the action suggestion device 1 includes a forecast information acquisition unit 11, a remaining power acquisition unit 12, an action list storage 13, a suggestion information generator 14, and a display 15. The action suggestion device 1 includes a LAN (Local Area Network) device, a modem, and so forth, and is capable of carrying out data communication with the outside over the Internet. Further, the action suggestion device 1 is connected to the battery cell 2, and acquires information indicative of remaining power from the remaining power indicator of the battery cell 2.
The forecast information acquisition unit 11 externally acquires information for forecasting power to be supplied to the battery cell 2 in a predetermined future period starting from the present time (forecast period, for example, 0 hour to 24 hours tomorrow).
According to the embodiment, the forecast information acquisition unit 11 acquires, as forecast information, information on weather forecast (in an area where the power generator 3 is located in the forecast period) as shown in FIG. 3A over the Internet. The forecast information in FIG. 3A shows that the weather in the forecast period in the area where the user's house is located (area where the power generator 3 is located) is fine. Weather forecast as forecast information is not limited to tomorrow's weather forecast, and may be hourly weather forecast or weekly weather forecast.

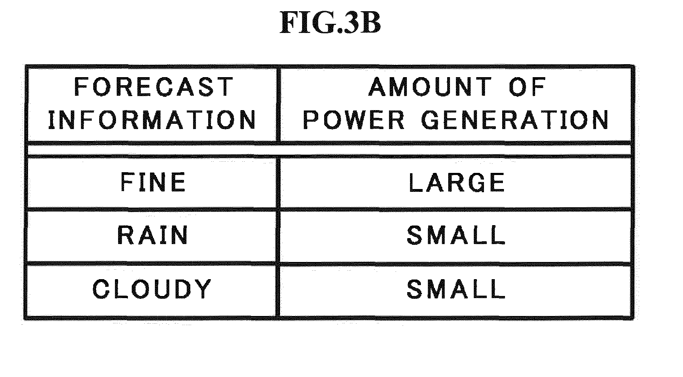

As shown in FIG. 3B, the forecast information acquisition unit 11 has a correlation list storing the contents of probable forecast information and the large/small amount of generated power in association with each other. Using the correlation list, the forecast information acquisition unit 11 acquires information indicating the large/small amount of power generated from the power generator 3 in the forecast period from the acquired forecast information. Then, the forecast information acquisition unit 11 transmits the acquired amount of forecasted power generation to the suggestion information generator 14.

The remaining power acquisition unit 12 acquires the value o remaining power from the remaining power indicator of the battery cell 2, and transmits the value to the suggestion information generator 14.

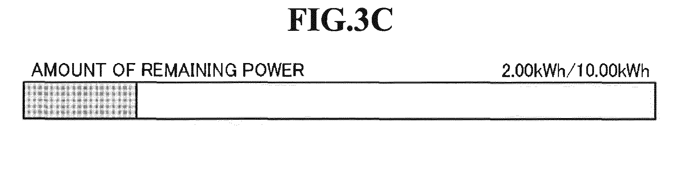

The value of remaining power that the remaining power acquisition unit 12 acquires from the remaining power indicator of the battery cell 2 includes information on the remaining capacity (8.00 kWh) which shows the value of the remaining power (2.00 kWh) and the amount in a fully charged state (10.00 kWh) in comparison with each other, as shown in, for example, FIG. 3C.

The action list storage 13 stores an action list listing actions which the user is likely to take in the forecast period and a period preceding the forecast period (pre-forecast period). The action list may be input to the action suggestion device 1 by the user or may be acquired externally.

The action list is a list defining whether power is to be consumed or not for each action which will be probably taken by the user in the forecast period and the pre-forecast period. According to the embodiment, as shown in FIG. 3C, the action list stores action identifiers "ID", text information "ACTION" indicating the content of an action, and "CONSUMED OR NOT" indicating whether the action consumes power in association with one another. A mark "O" in the column of "CONSUMED OR NOT" indicates that power will be consumed, and a mark "×" indicates that power will not be consumed.. For example, the action of commuting to an office by an electric vehicle as specified by "ID" of "1" consumes power.

The suggestion information generator 14 extracts, from the action list stored in the action list storage 13, a combination of actions in the forecast period and actions in the pre-forecast period that match with a predetermined evaluation criterion based on the amount of forecast power generation acquired by the forecast information acquisition unit 11 and the value of power remaining in the battery cell 2 which is acquired by the remaining power acquisition unit 12. The predetermined evaluation criterion is, for example, to maximize the stored power after the forecast period passes. The predetermined evaluation criterion and how to extract the combination will be described later.

The suggestion information generator 14 generates suggestion information suggesting that the combination of actions extracted should be taken as actions to be taken in the forecast period and the pre-forecast period, and sends the information to the display 15. The suggestion information may be a document which is generated by fitting the extracted combination of actions in a predetermined suggestion template, or may be a schedule table emphasizing the extracted combination of actions. Alternatively, the suggestion information may be audio information.

The display 15 is configured to include a display device such as a liquid crystal display or organic EL (Electro Luminescence) display, and displays the suggestion information received from the suggestion information generator 14. When the suggestion information is audio, the display 15 is configured to include a loudspeaker or the like which outputs sounds. The suggestion information generator 14 may transmit generated information to other terminal through which the user can take a view, such as a portable terminal carried by the user, and make the terminal display the suggestion information thereon.

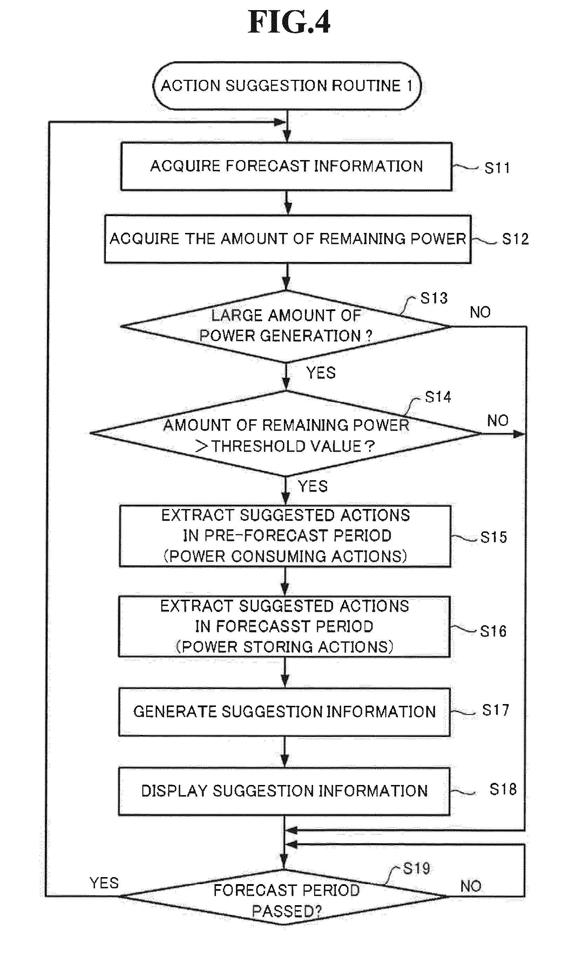

Next, a routine that the action suggestion device 1 executes is described. When powered on (or when the user performs an operation of displaying information suggesting an action), the action suggestion device 1 initiates a routine (action suggesting routine 1) illustrated in FIG. 4.

In the action suggesting routine 1, the forecast information acquisition unit 11 in the action suggestion device 1 acquires forecast information (weather forecast in the forecast period in the area where the user's house is located) as shown in FIG. 3A over the Internet (step S11).

Then, the remaining power acquisition unit 12 acquires the value of remaining power as shown in FIG. 3C from the remaining power indicator of the battery cell 2 (step S12).

Further, based on the acquired weather forecast, the forecast information acquisition unit 11 forecasts whether the amount of power generation in the forecast period is large or not (step S13).

Specifically, information on the amount of power generation from the power generator 3 that matches with the contents of the acquired weather forecast is acquired from the correlation list shown in FIG. 3B. When the forecast information shows "FINE", the row of "FINE" in the "FORECAST INFORMATION" in the correlation list is extracted, and "LARGE" in an item "GENERATED POWER" in the extracted row is acquired to be forecast information on the amount of power generation. In other words, the amount of power generation is forecast to be large. Similarly, when tomorrow's weather forecast is "RAIN" or "CLOUDY", the amount of power generation is forecast to be small.

When the amount of power generation is forecast to be small (step S 13; NO), the routine goes to step S 19.

When the amount of power generation is forecast to be large (step S 13; YES), on the other hand, the suggestion information generator 14 determines whether the generated power can be stored in the battery cell 2. Specifically, the suggestion information generator 14 determines whether the value of the remaining power acquired by the remaining power acquisition unit 12 is larger than a predetermined threshold value (step S 14). The threshold value may be a value set upon factory shipment, or may be specified by the user.

When the threshold value is 5.00 kWh and there is remaining power of 2.00 kWh as shown in FIG. 3B, for example, it is determined that the amount of power generation is equal to or smaller than the predetermined value. The threshold value is not limited to such a value, and may be "0."

When the amount of power generation is equal to or smaller than the predetermined value. (step S 14; NO), the routine goes to step S 19.

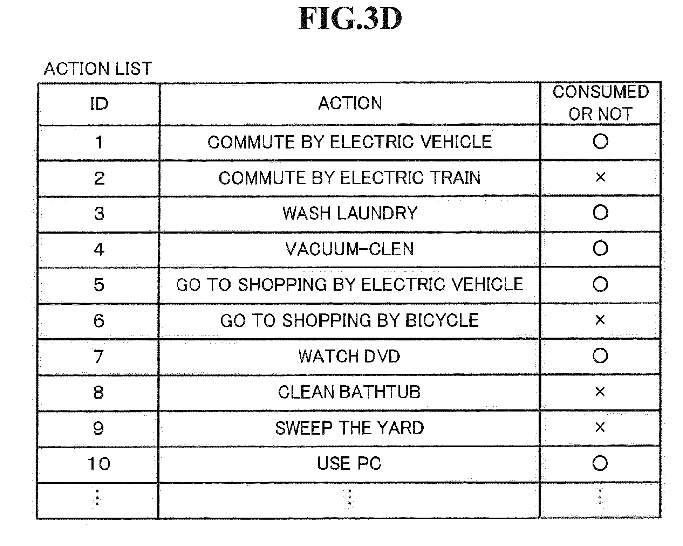

When the amount of power generation is larger than the predetermined value. (step S 14; YES), it is necessary to secure a capacity for storing power to be generated in the forecast period for efficient use of power. Accordingly, the suggestion information generator 14 extracts an action consuming power as a suggested action in the forecast period from the action list stored in the action list storage 13 (step S15). In the action list shown in FIG. 3D, actions with "ID" of "1," "3," "4," "5," "7" and "10" with the item "CONSUMED OR NOT" having the mark "O" are extracted. At this time, when the actions that match with the predetermined evaluation criterion (actions that consume power in this case) are not found in the action list, the suggestion information generator 14 may generate suggestion information indicating an error, and display the suggestion information on the display 15.

Further, the suggestion information generator 14 extracts actions that store power as suggested actions in the forecast period from the action list stored in the action list storage 13 (step S16). The action that stores power means an action whose power consumption is less than the amount of power generation. According to the embodiment, the actions with the item "CONSUMED OR NOT" of "×" in the action list shown in FIG. 3D are the actions storing power.

Further, the availability of battery cell 2 is included in the condition. With the battery cell 2 mounted in an electric vehicle, for example, when the electric vehicle is used, the power generated by the power generator 3 cannot be stored in the battery cell 2, hence the condition includes connection of the electric vehicle to the battery cell 2 during an action period. In this case, the actions that have the item "CONSUMED OR NOT" of "×" in the action list shown in FIG. 3D and do not use the electric vehicle (actions with "ID" of "2," "6," "8" and "9") are extracted. At this time, when the actions that match with the predetermined evaluation criterion (actions that save power in this case) are not found in the action list, the suggestion information generator 14 may generate suggestion information indicating an error, and display the suggestion information on the display 15.

When every battery cell 2 is mounted on the electric vehicle, only an action that does not use the electric vehicle may be the condition for the "action that stores power." In this case, the actions having the "ID" other than "1" and "5" that involve the use of the electric vehicle are extracted from the action list shown in FIG. 3C.

Next, the suggestion information generator 14 generates suggestion information showing a combination of the extracted actions in the forecast period (actions storing power) and the extracted actions in the pre-forecast period (actions consuming power) (step S17). The suggestion information generator 14 displays the suggestion information on the display 15 (step S18).

When the suggestion information is displayed on the display 15, the forecast information acquisition unit 11 determines whether the forecast period has passed or not (step S 19). When the forecast period has not passed (step S 19; NO), the forecast information acquisition unit 11 repeats step S 19.

When the forecast period passes (step S19; YES), the forecast information acquisition unit 11 returns to step S11 for the next forecast period, and repeats steps S11 to S 19.

As described above, the action suggestion system 100 according to the first embodiment can suggest, to a user, a combination of actions that secures an available capacity of the battery cell 2 in a pre-forecast period and stores power in a forecast period, leading to highly efficient use of electricity. When the user takes such actions, a sufficient amount of power can be stored in the battery cell after the end of the forecast period, so that the power can be used while the amount of power generation from the power generator 3 is small. As a result, the efficiency of power usage is improved.

Apparently, the action suggestion system 100 according to the embodiment can effectively suggest to a user who is very interested in efficient use of action-oriented power. The user can improve the power efficiency merely by taking the suggested actions without personally checking the amount of power stored at present or the amount of power to be generated in the future. In other words, a user can execute high power efficiency actions without feeling burden.

Specifically, when the power generator 3 is a solar panel and tomorrow's weather forecast is fine, a large amount of power generation is expected. As actions to consume the power remaining in the battery cell are suggested to the user as today's actions, and actions to consume the power remaining in the battery cell are suggested to the user as tomorrow's actions, it is expected that the amount of power generation for a fine day (tomorrow) is effectively stored in the battery cell 2.

(Second Embodiment)

Next, a second embodiment of the invention is described.

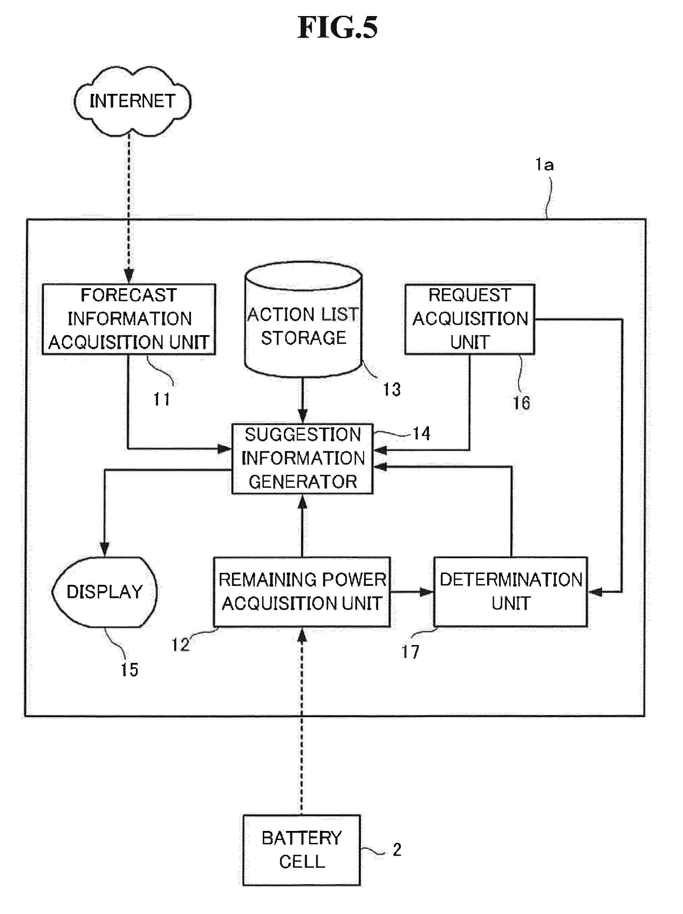

As shown in FIG. 5, an action suggestion device 1a according to the second embodiment includes a request acquisition unit 16 and a determination unit 17 in addition to the configuration of the action suggestion device 1 according to the first embodiment.

The request acquisition unit 16 acquires a request relating to the use of power by the user. The request relating to the use of power by the user includes, when the user consumes both power stored in battery cell 2 and power purchased from a power company, the upper limit of the amount of power to be bought from the power company in a requested period (hereinafter called "request period"), selling a predetermined amount of power to the power company, and setting the ratio of the amount of power generated by the power generator 3 to the consumed power to a constant value and so forth. The following description mainly discusses a case where the request acquisition unit 16 acquires, as a request, that the amount of power to be bought from a power company in a request period is equal to or less than a predetermined value.

The request acquisition unit 16 sends the acquired request to the determination unit 17.

The suggestion information generator 14 extracts, from the action list stored in the action list storage 13, a combination of actions in the forecast period and actions in the pre-forecast period that match with a predetermined evaluation criterion based on the amount of forecast information acquired by the forecast information acquisition unit 11 and the value of power remaining in the battery cell 2 which is acquired by the remaining power acquisition unit 12. Here, matching with the predetermined evaluation criterion means that the power generated by the power generator 3 is effectively used or stored, and that the request is fulfilled.

The suggestion information generator 14 generates suggestion information showing the combination of extracted actions in the forecast period and extracts actions in the pre-forecast period, and sends the suggestion information to the display 15.

The determination unit 17 is connected to an electric power meter installed on a home electric panel and the remaining power indicator of the battery cell 2 to receive information on the amount of power used, the amount of power stored, the amount of power sold to the power company, and the like in the request period, as the conditions of the user's use of power. Alternatively, the determination unit 17 is connected to the power company over the Internet to receive information on the user's use of power.

When the request period passes, the determination unit 17 acquires data indicating the past record of the user's use of power in the request period, and determines whether the request acquired by the request acquisition unit 16 was fulfilled based on the data. When it is determined that the request was not fulfilled, the determination unit 17 sends information indicating that the request was not fulfilled to the suggestion information generator 14.

Upon reception of the information indicating that the request was not fulfilled, the suggestion information generator 14 generates warning information to warn the user to that effect, and makes the display 15 display the warning information.. The warning information is, for example, a message "The amount of power to be bought today has exceeded the limit."

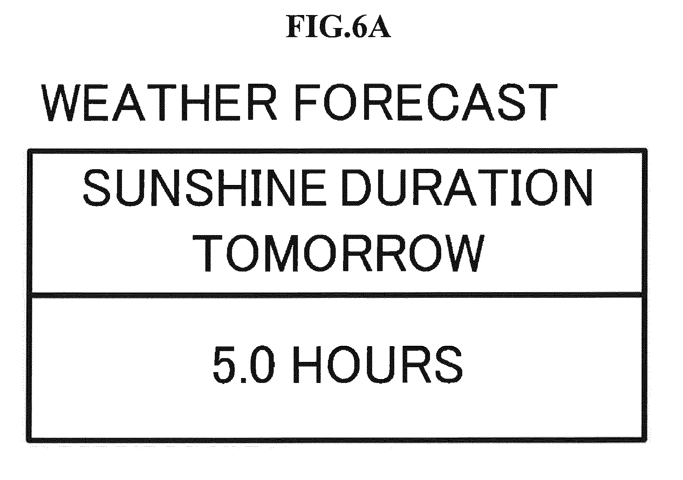

According to the embodiment, the forecast information acquisition unit 11 acquires forecast information including information (sunshine duration) for forecasting the amount of power to be generated in the request period as shown in FIG. 6A. In the example of FIG. 6A, the sunshine duration in an area where the user's house is located in the request period (tomorrow) is forecast to be 5.0 hours. The forecast information acquisition unit 11 acquires a forecast value of the amount of power to be generated in the request period from the forecast information. The forecast value can be acquired by, for example, multiplying the sunshine duration by a predetermined value.

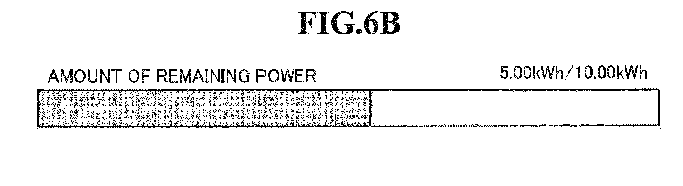

The remaining power acquisition unit 12 acquires information indicating the amount of remaining power as shown in FIG. 6B from the remaining power indicator of the battery cell 2. In the example of FIG. 6B, the value of the amount of remaining power is 5.00 kWh indicating that power of 5.00 kWh remains in the battery cell 2 having power of 10.00 kWh in the fully charged state.

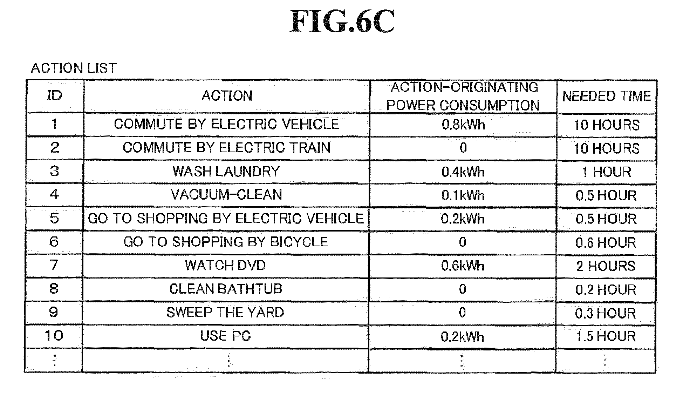

The action list storage 13 stores an action list as shown in FIG. 6C. In the example of FIG. 6C, the action list includes items "ID" identifying actions, "ACTION" indicating the contents of actions, "ACTION-ORIGINATING POWER CONSUMPTION" indicating the amount of power to be consumed by taking an action, and "NEEDED TIME" indicating the time needed for an action. For example, the action with ID of "1" of commuting by an electric vehicle takes ten hours from the time of going to an office to going home and consumes power of 0.8 kWh. "ACTION-ORIGINATING POWER CONSUMPTION" may be measured when the user actually takes the action, or may be set to an ordinary value.

Next, a routine that the action suggestion device 1a executes is described.

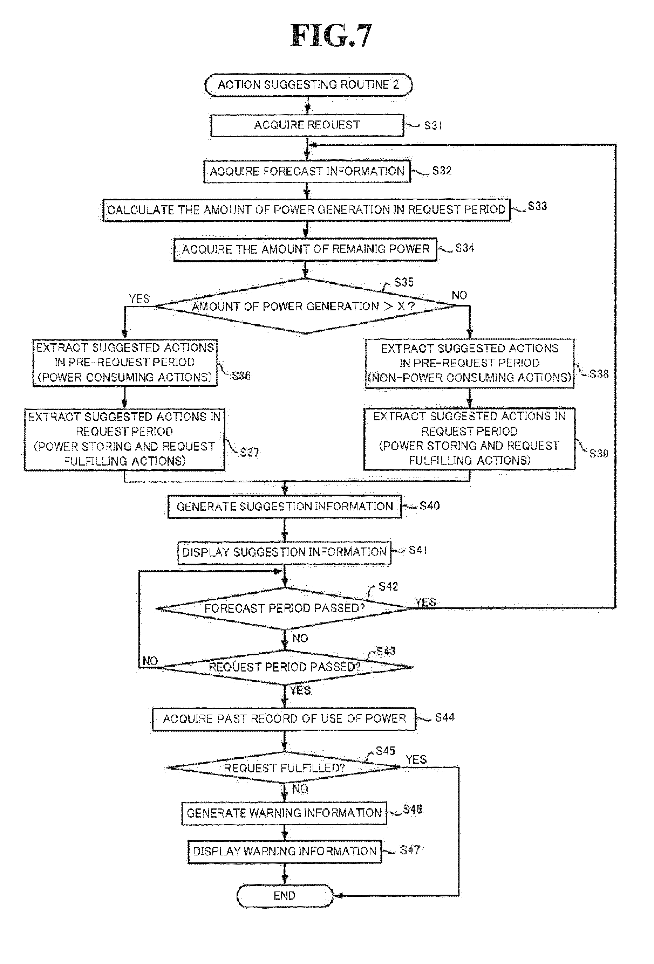

When acquiring a request relating to the user's use of power, or when the user performs an operation of displaying information suggesting an action, the action suggestion device 1a initiates a routine (action suggesting routine 2) illustrated in FIG. 7.

In the action suggesting routine 2, first, the request acquisition unit 16 acquires a request relating to the user's use of power (step S31).

Then, the forecast information acquisition unit 11 acquires forecast information. Specifically, the forecast information acquisition unit 11 acquires weather forecast in the area where the user's house is located in the request period over the Internet (step S32).

Next, the forecast information acquisition unit 11 calculates the amount of power generation in the request period based on the forecast information (weather forecast) (step S33). Specifically, the sunshine duration is multiplied by a previously-stored standard amount of power generation (for example, 1.56 kWh) per sunshine duration. When the power generator 3 is a solar panel and forecast information indicates tomorrow's sunshine duration is 5.0 hours as shown in FIG. 6A, for example, the suggestion information generator 14 predicts the amount of electricity (5.0 × 1.56 = 7.80 kWh) that is generated in the sunshine duration (5.0 hours) by the power generator 3.

Next, the remaining power acquisition unit 12 acquires the amount of remaining power from the remaining power indicator of the battery cell 2 (step S34).

Then, the suggestion information generator 14 determines whether the value of the amount of remaining power is larger than a threshold value X (step S35). It is assumed here that the threshold value X is equal to the value of the maximum power stored in the battery cell 2 minus the value of the amount of power generation in the forecast period. When the value of the amount of remaining power is larger than the threshold value X (step S35; YES), the suggestion information generator 14 extracts, as actions in the pre-request period, actions that consume excess power exceeding the threshold value X and can be taken in a pre-request period from the action list stored in the action list storage 13 (step S36).

The actions that can be taken in the pre-request period (from the present time to the initiation of the request period) are those whose needed times are shorter than the pre-request period. When the amount of power remaining in the battery cell 2 is 5.00 kWh as shown in FIG. 6B, for example, the amount of remaining power > X (the maximum stored power of 10 kWh of the battery cell 2 minus the amount of power generation of 7.80 kWh in the forecast period = 2.20 kWh), so that the suggestion information generator 14 extracts, from the action list shown in FIG. 6C, actions that can be taken in the pre-request period (for example, one day) and consumes the amount of power remaining in the battery cell 2 such that the total power consumed becomes the excess remaining power of 5.00 kWh - 2.20 kWh = 2.80 kWh.

Next, the suggestion information generator 14 extracts actions that store power, fulfill the request, and can be taken in the request period, as actions in the forecast period, from the action list stored in the action list storage 13 (step S37). When the request acquired by the request acquisition unit 16 is a request from the power company requesting that "Please suppress the amount of power to be bought tomorrow to 10.00 kWh," for example, the suggestion information generator 14 extracts actions that can be taken in a day and use bought power to set the total action-originating power to become 10.00 kWh or less, from the action list shown in FIG. 6C. The amount of power bought can be obtained, for example, by the following equation 1.

$$\text{amount of power bought} = \text{action-originating power} - \text{expected amount of power stored}$$
$$\text{when the request period starts} + \text{predicted amount of power generation} \qquad (1)$$

The expected amount of power stored can be the current amount of power stored minus the amount of power consumed by suggested actions in the pre-request period. In other words, of the actions registered in the action list in step S37, those actions whose power consumption ensures that the amount of power bought acquired by the equation 1 is smaller than the required amount. Note that when the battery cell 2 is mounted in the electric vehicle, the extraction condition includes a condition such that the electric vehicle is not used.

When the request is such that a predetermined amount of power is to be sold or the like, actions that make the amount of power that can be sold (remaining power after the end of the request period) larger than what is requested have only to be taken.

When the value of the amount of remaining power is smaller than the threshold value X (step S35; NO), on the other hand, the suggestion information generator 14 extracts actions that do not consume power and can be taken in the pre-request period from the action list stored in the action list storage 13 (step S38).

The suggestion information generator 14 also extracts actions that store power, fulfill the request and can be taken in the forecast period, as actions in the forecast period, from the action list stored in the action list storage 13 (step S39).

Next, the suggestion information generator 14 generates suggestion information showing a combination of the extracted actions in the pre-request period and the extracted actions in the request period (step S40).

Then, the suggestion information generator 14 displays the suggestion information on the display 15 (step S41).

When the forecast period passes (step S42; YES), the forecast information acquisition unit 11 returns to step S31 to repeat steps S31 to S42. When the forecast period has not passed (step S42; NO), the determination unit 17 determines whether the request period has passed (step S43).

When the request period has not passed (step S43; NO), the routine returns to step S42 to repeat step S42 and step S43. When the request period has passed (step S43; YES), the determination unit 17 acquires data indicating the past record of the user's use of power (step S44), and determines whether the request is fulfilled based on the data (step S45).

When the request acquired by the request acquisition unit 16 is a request from the power company requesting that "Please suppress the amount of power to be bought tomorrow to 10.00 kWh," as mentioned above, for example, the determination unit 17 acquires data indicating the amount of power for a day bought from the power company, and determines whether the request was fulfilled by checking if the amount of power exceeds 10.00 kWh.

When it is determined that the request was fulfilled (step S45; YES), the routine is terminated. When it is determined that the request was not fulfilled (step S45; NOT), the determination unit 17 sends information indicating that the request was not fulfilled to the suggestion information generator 14.

The suggestion information generator 14 which has received the information indicating that the request was not fulfilled generates warning information to warn the user that the request was not fulfilled (step S46). The suggestion information generator 14 makes the display 15 display the warning information (step S47), and terminates the routine. The warning information is, for example, a message "The amount of power to be bought today has exceeded 10.00 kWh."

The request acquisition unit 16 may acquire, as a request, schedule information on planned blackouts in the area where the user's house is located. In this case, the suggestion information generator 14 should interpret the schedule information on planned blackouts as a request "To set the amount of power to be brought to 0.00 kw during the period of planned blackouts."

Alternatively, the suggestion information generator 14 should interpret the schedule information on planned blackouts as a request "To store the minimum amount of power consumption in the period of planned blackouts until the planned blackouts start." The minimum amount of power consumption is the amount of power consumption needed for living, such as the power to be consumed by a refrigerator, an air-conditioner with the suggested temperature set and room light in the night.

The action suggestion device 1a may not include the determination unit 17, and has only to display suggestion information showing a combination of extracted actions in the pre-forecast period and extracted actions in the forecast period on the display 15. Further, request information is not limited to a request from a power company, and may be a request made by a national governmental organization, a local governmental organization or the like, or made by the user.

As described above, the action suggestion system according to the second embodiment can suggest actions that fulfill a request relating to the use of power which is made by a power company or the like to a user as an additional condition. Accordingly, the user has only to take the suggested actions at the time the user carries out the actions that fulfill the request, so that the user is relieved of the burden.

When the request is schedule information on planned blackouts, for example, actions to store power are suggested as actions in the pre-forecast period , suggesting the user to take actions feasible on the amount of power to be generated by the power generator 3 and the amount of power remaining in the battery cell 2 in the period of planned blackouts. It is expected from the suggestion that the user can avoid difficulty in living during the period of planned blackouts. This advantage is applicable not only to home living but also to a case where the time at which an event (major operation or the like) which requires power in a hospital or the like is performed is selected so that power is effectively used under conditions where disruption in power supply can not be tolerated.

Further, when the request is not fulfilled, the user is provided with warning information warning the user, so that it is likely that the probability of the user's taking suggested actions is improved.

(Third Embodiment)

Next, an action suggestion device 1b according to a third embodiment of the invention is described. The action suggestion device 1b includes a user information storage 18 and an input device 19 in addition to the configuration of the action suggestion device 1 according to the first embodiment.

The user information storage 18 stores user information indicating behavioral pattern of a user. The user information may be input to the action suggestion device 1b by the user, or may be acquired externally. The details of user information will be given later.

The input device 19 accepts an input of execution information indicating that the user has taken an action within a predetermined period. The input device 19 stores execution information in the action list stored in the action list storage 13. The execution information may be acquired externally. For example, execution information indicating that the user has taken an action may be acquired by installing a power consumption meter on an electronic home appliance to detect the use of the electronic appliance. Alternatively, the use of the electronic appliance may be detected by checking if the electronic appliance is powered on.

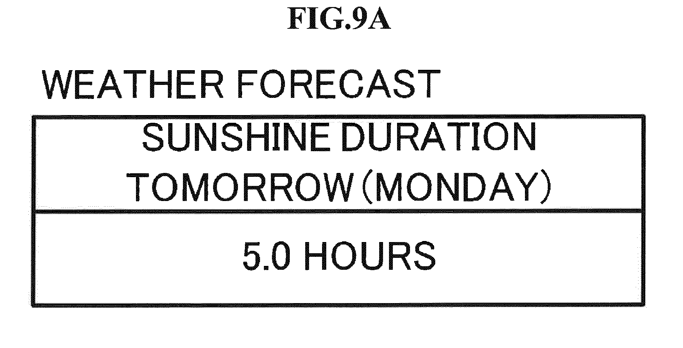

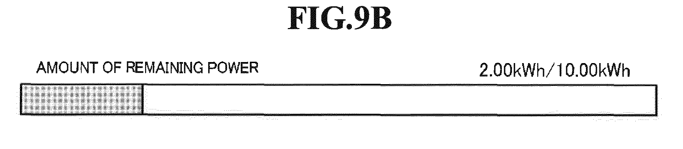

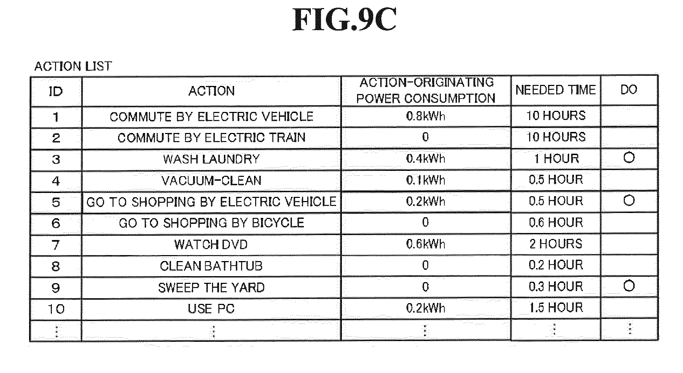

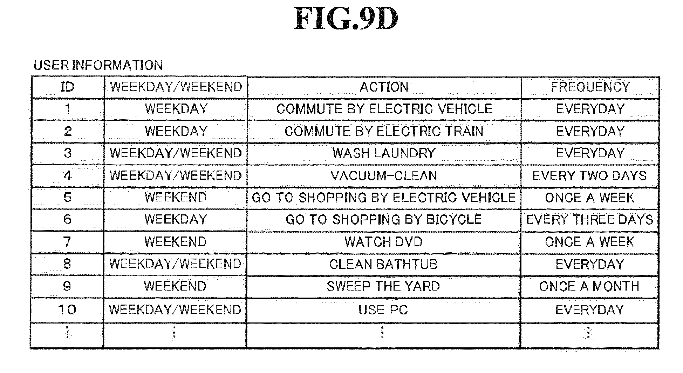

FIG. 9 is a diagram showing an example of forecast information, the value of remaining power, the action list and the user information according to the third embodiment. The forecast information acquisition unit 11 acquires forecast information externally as done by the component with the same name according to the second embodiment. In the example of FIG. 9A, the forecast information acquisition unit 11 receives information indicating the sunshine duration (5.0 hours) tomorrow (Monday) in the area where the user's house is located.

The remaining power acquisition unit 12 receives the amount of remaining power acquired from the remaining power indicator of the battery cell 2 as done by the components with the same name according to the first and second embodiments. In the example of FIG. 9B, the value of the remaining power is 2.00 kWh, indicating that power of 2.00 kWh remains in the battery cell 2 having a capacity of 10.00 kWh in a fully charged state.

The action list stored in the action list storage 13 of the action suggestion device 1b includes an action history as shown in FIG. 9C. In the example of FIG. 9C, the action list includes items "ID" identifying actions, "ACTION" indicating the contents of actions, "ACTION-ORIGINATING POWER CONSUMPTION" indicating the amount of power to be consumed by taking an action, "NEEDED TIME" indicating the time needed for an action, and "DO" indicating whether the user has taken an action. When execution information is input to the input device 19, "O" is stored in the item of "DO" for the action in the action list. For example, the action with ID of "3" of washing laundry which consumes power has already been taken in a predetermined period. The predetermined period will be discussed later.

User information to be stored in the user information storage 18 records when and how frequently the user takes an action registered in the action list as shown in FIG. 9D. In other words, the user information records the tendency (behavioral pattern) on how to execute information registered in the action list. Here, on the assumption that the action pattern of the user differs between weekdays and the weekend, actions which are taken on weekdays are distinguished from those taken on the weekend. This categories are not limited to weekdays and the weekend, and can be freely set according to the user's tendency.

In the example of FIG. 9D, the user information includes items "ID" identifying actions, "WEEKDAY/WEEKEND" indicating that an action is taken on a weekday or the weekend, "ACTION" indicating the contents of actions, and "FREQUENCY" indicating how frequently the action is taken. The "ID" and "ACTION" are the same as those in the action list. Regarding the item "WEEKDAY/WEEKEND", "weekday" indicates that the action is taken only on a weekday, "weekend" indicates that the action is taken only on the weekend, and "weekday/weekend" indicates that the action is taken on both a weekday and the weekend. For example, the action with "ID" of "1" of commuting by an electric vehicle is taken every day on weekdays.

The item "FREQUENCY" is associated with the item "DO" in the action list. Because it is determined that an action which is taken within a predetermined period set according to the frequency at which the user takes the action has low execution priority, a flag is set to lower the priority for later selection. Specifically, when the period indicated by the "FREQUENCY" for the action in the user information elapses since the time at which the execution information has been input to the input device 19 and "O" has been stored in the item "DO" the mark "O" in the item "DO" is deleted. For example, regarding the action with ID of "3" of washing laundry, "FREQUENCY" is every day, so that "O" is stored in the item "DO", and is deleted after 24 hours, indicating that the action is not done.

Note that the cycle (predetermined period) in which the item "DO" in the action list may not be associated with the user information, and may be an average cycle.

Next, a routine that the action suggestion device 1a executes is described.

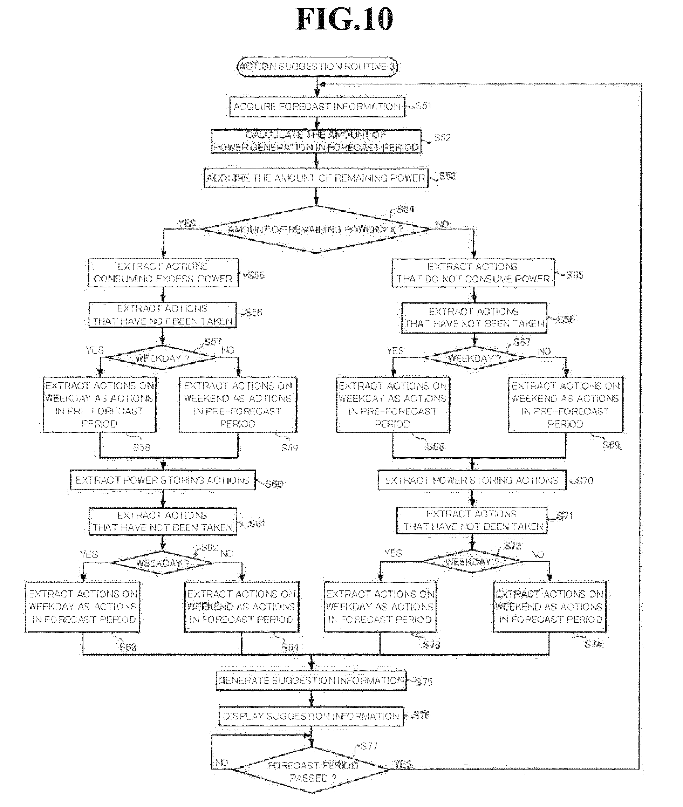

When acquiring a request relating to the user's use of power, or when the user performs an operation of displaying information suggesting an action, the action suggestion device 1b initiates a routine (action suggesting routine 3) illustrated in FIG. 10.

In the action suggesting routine 3, first, the forecast information acquisition unit 11 of the action suggestion device 1b acquires forecast information. Specifically, the forecast information acquisition unit 11 acquires weather forecast in the area where the user's house is located in the forecast period over the Internet (step S51).

Next, the forecast information acquisition unit 11 calculates the amount of power generation in the forecast period as done in step S32 of the action suggesting routine 2 illustrated in FIG. 7 (step S52).

Next, the remaining power acquisition unit 12 acquires the amount of remaining power from the remaining power indicator of the battery cell 2 (step S53).

Then, the suggestion information generator 14 determines whether the value of the amount of remaining power is larger than the threshold value X (step S54). It is assumed here that the threshold value X is equal to the value of the maximum power stored in the battery cell 2 minus the value of the amount of power generation in the forecast period.

When the value of the amount of remaining power is larger than the threshold value X (step S54; YES), it is necessary to secure capacity for storing power to be generated in the forecast period. Accordingly, the suggestion information generator 14 extracts actions that consume excess power exceeding the threshold value X as a candidate for suggested actions in the pre-forecast period (step S55).

Further, the suggestion information generator 14 refers to the item "DO" in the action list to extract actions which can be predicted to be taken by the user soon from the actions extracted in step S55 based on the user's behavioral pattern.

Specifically, the suggestion information generator 14 extracts actions not marked by "O" in "DO" (not done yet) in the action list (step S56).

Next, the suggestion information generator 14 further selects actions that are extracted based on the behavioral pattern. Specifically, it is determined whether the pre-forecast period is a weekday or the weekend (step S57). When it is a weekday (step S57; YES), the suggestion information generator 14 refers to the item "WEEKDAY/WEEKEND" in the user information to extract actions on weekdays which can be taken in the pre-forecast period, as actions in the pre-forecast period, from the actions extracted in step S56 (step S58).

When it is the weekend (step S57; NO), the suggestion information generator 14 refers to the item "WEEKDAY/WEEKEND" in the user information to extract actions on the weekend which can be taken in the pre-forecast period, as actions in the pre-forecast period, from the actions extracted in step S56 (step S59).

Next, the suggestion information generator 14 extracts actions to store power as candidates for the suggested actions in the forecast period from the action list stored in the action list storage 13 (step S60). A specific method is similar to the method of extracting actions to store power in step S16 in FIG. 3.

Further, the suggestion information generator 14 selects actions having a high priority from the extracted actions. Specifically, the suggestion information generator 14 refers to the item "DO" in the action list to extract actions which have not been taken yet from the actions extracted in step S60 (step S61). Here, the actions in the pre-forecast period extracted in step S59 are considered as ones to be taken, and "O" is temporarily set in the item "DO" in the action list.

Next, the suggestion information generator 14 further selects actions extracted based on the behavioral pattern. Specifically, the suggestion information generator 14 determines whether the forecast period is a weekday or the weekend (step S62). When it is a weekday (step S62; YES), the suggestion information generator 14 refers to the item "WEEKDAY/WEEKEND" in the user information to extract actions on weekdays which can be taken in the forecast period, as actions in the forecast period, from the actions extracted in step S61 (step S63).

When it is the weekend (step S62; NO), the suggestion information generator 14 refers to the item "WEEKDAY/WEEKEND" in the user information to extract actions on the weekend which can be taken in the forecast period, as actions in the forecast period, from the actions extracted in step S61 (step S64).

When the value of the amount of remaining power is smaller than the threshold value X (step S54; NO), on the other hand, it is unnecessary to secure capacity to save power to be generated in the forecast period. Accordingly, the suggestion information generator 14 extracts actions that do not consume power as candidates for the suggested actions in the forecast period from the action list stored in the action list storage 13 (step S65).

When the power remaining in the battery cell 2 is 2.00 kWh, as shown in FIG. 9B, for example, the remaining power of 2.00 kWh < X (maximum power of 10 kWh stored in the battery cell 2 - the value of the amount of power generation of 7.80 kWh in the forecast period = 2.20 kWh), o that the suggestion information generator 14 extracts actions that do not consume power, that is, actions with "ID" of "2,", "6," "8," and "9" and the amount of action-originating power of 0 kWh from the action list shown in FIG. 9C.

Next, the suggestion information generator 14 refers to the item "DO" in the action list to extract actions which have not been taken yet from the actions extracted in step S65 (step S66). For example, the suggestion information generator 14 extracts actions with "ID" of "2,'" "6," and "8" and without "O" in the item "DO" from the actions with "ID" of "2,", "6," "8," and "9" shown in FIG. 9C.

Next, the suggestion information generator 14 further selects actions extracted based on the behavioral pattern. Specifically, the suggestion information generator 14 determines whether the pre-forecast period is a weekday or the weekend (step S67). When it is a weekday (step S67; YES), the suggestion information generator 14 refers to the item "WEEKDAY/WEEKEND" in the user information to extract actions on weekdays which can be taken in the pre-forecast period, as actions in the pre-forecast period, from the actions extracted in step S66 (step S68).

When it is the weekend (step S67; NO), the suggestion information generator 14 refers to the item "WEEKDAY/WEEKEND" in the user information to extract actions on the weekend which can be taken in the pre-forecast period, as actions in the pre-forecast period, from the actions extracted in step S66 (step S69). Because the forecast period (tomorrow) is Monday in the example of FIG. 9A, for example, the pre-forecast period (today) is Sunday. Therefore, the suggestion information generator 14 determines that it is the weekend, and extracts bathtub cleaning with "ID" of "8" which is to be done on the weekend from the actions with "ID" of "2," "6" and "8", and treats the actions as actions in the pre-forecast period.

Next, the suggestion information generator 14 extracts actions to store power as candidates for the suggested actions in the forecast period from the action list stored in the action list storage 13 (step S70). A specific method is similar to the method of extracting actions to store power in step S16 in FIG. 3.

In the example of FIG. 9C, the suggestion information generator 14 extracts actions with "ID" of "2," "6," "8" and "9" and with action-originating power of 0 kWh. When the battery cell 2 is mounted in the electric vehicle and power is to be bought from the power company, the suggestion information generator 14 extracts actions with "ID" of "2," "3," "4," "6," "7," "8" and "9" which do not use the electric vehicle.

Further, the suggestion information generator 14 selects actions having a high priority from the extracted actions. Specifically, the suggestion information generator 14 refers to the item "DO" in the action list to extract actions which have not been taken yet from the actions extracted in step S70 (step S71). Here, it is determined that the actions in the pre-forecast period extracted in step S69 are to be taken, and "O" is temporarily set in the item "DO" in the action list. Although the suggestion information generator 14 determines that bathtub cleaning extracted as an action in the pre-forecast period is carried out, because the frequency is every day, the suggestion information generator 14 determines that bathtub cleaning will be in an unexecuted state tomorrow. Further, because the action with "ID" of "3" among the actions with "ID" of "3," "5" and "9" also has a frequency of every day, the suggestion information generator 14 determines that the action will be in an unexecuted state tomorrow.

If the suggestion information generator 14 extracts the actions with "ID" of "2," "6," "8" and "9" in step S70, the suggestion information generator 14 extracts the actions with "ID" of "2," "6," "8" and "9" which are in an unexecuted state.

Next, the suggestion information generator 14 further selects actions extracted based on the behavioral pattern. Specifically, the suggestion information generator 14 determines whether the forecast period is a weekday or the weekend (step S72).

When it is a weekday (step S72; YES), the suggestion information generator 14 refers to the item "WEEKDAY/WEEKEND" in the user information to extract actions on weekdays which can be taken in the forecast period, as actions in the pre-forecast period, from the actions extracted in step S71 (step S73).

In the example of FIG. 9A, for example, the forecast period (tomorrow) is Monday, so that the suggestion information generator 14 determines that it is a weekday, and extracts the action with "ID" of "2" of commuting by an electric train which is done on weekdays and the action with "ID" of "8" of cleaning the bathtub from the actions with "ID" of "2," "6" and "8", as actions in the forecast period.

When it is the weekend (step S72; NO), the suggestion information generator 14 refers to the item "WEEKDAY/WEEKEND" in the user information to extract actions on the weekend which can be taken in the forecast period, as actions in the forecast period, from the actions extracted in step S71 (step S74).

Next, the suggestion information generator 14 generates suggestion information showing a combination of the extracted actions in the forecast period and the extracted actions in the pre-forecast period (step S75). Then, the suggestion information generator 14 displays the suggestion information on the display 15 (step S76). The forecast information acquisition unit 11 determines whether the forecast period elapses (step S77). When the forecast period does not elapse (step S77; NO), the forecast information acquisition unit 11 repeats step S77. When the forecast period elapses (step S77; YES), the forecast information acquisition unit 11 returns to step S51 to repeat steps S51 to S77.

As described above, the action suggestion system according to the third embodiment extracts actions in consideration of the user's behavioral pattern and suggests the actions, so that the user is likely to take the suggested actions. Likewise, actions which have not been taken yet are extracted and are suggested to the user, so that the user is likely to take the suggested actions.

According to the embodiment, the evaluation criterion is to maximize the amount of stored power in the forecast period. However, the evaluation criterion is not limited to this condition, and may be, for example, maximization of the amount of power remaining in the battery cell 2 at the end of the forecast period, or minimization of the amount of power to be bought from the power company. Alternatively, when the amount of power remaining in the battery cell 2 is the maximum, the evaluation criterion may be the permission of selling excess power to the power company, maximization of the amount of power to be sold or minimization of the amount of power to be bought from the power company minus the minimization of the amount of power to be sold, or may be a combination thereof.

The embodiment has been described of the example where the power generator 3 is a solar panel, and the forecast information acquisition unit 11 acquires weather forecast on solar radiation such as fine day, rain and cloudy as forecast information. The invention is not limited to this case, and may be modified in various forms according to the property of the power generator 3. When the power generator 3 is an aerogenerator for home, for example, the forecast information acquisition unit 11 acquires weather forecast indicating the direction of the wind, the wind velocity and the like as forecast information. When the tomorrow' wind velocity is equal to or larger than a predetermined value (for example, wind velocity of 5 m), the suggestion information generator 14 forecasts that the amount of power generation tomorrow is large. Alternatively, the forecast information acquisition unit 11 may calculate the amount of power generation from the time at which the wind velocity becomes equal to or larger than a given value.

Further, when the power generator 3 is an external power supply, it may be determined that the amount of power generation is large if the external power supply can be secured, whereas when the external power supply is not secured, it may be determined that the amount of power generation is small.

The embodiment has been described of the example where today is a pre-forecast period and tomorrow is a forecast period. However, the embodiment is not limited to this example. When the evaluation criterion is such that a predetermined amount of power in the battery cell 2 is stored a week later, for example, the suggestion information generator 14 may forecast the amount of power generation for each day from one week of weather forecast acquired by the forecast information acquisition unit 11, calculate which action should be taken each day to store a predetermined amount of power indicated by the request one week later, based on the value of the amount of power remaining in the battery cell 2 acquired by the remaining power acquisition unit 12, and make a schedule of one week of actions before giving a suggestion to the user.

The description has been given of the configuration of suggesting one action which can be finished within the period among the actions in the action list as possible actions in the pre-forecast period and the forecast period by way of example. This configuration is not restrictive, and a possible configuration allows a user to register desired actions in a schedule book in a predetermined period, and extracts a combination of actions which provides the maximum power efficiency. Further, the user may set the priority to actions, so that only those in the extracted actions which have high priority are displayed. Furthermore, an action in the extracted actions which has the highest priority may be extracted, and when time remains in the period, an action in the extracted actions which has the second highest priority and whose power consumption clears the condition may be displayed together.

According to the embodiment, extraction of actions in the pre-forecast period and extraction of actions in the forecast period are carried out at the same time, and suggestion information showing a combination of the actions in the pre-forecast period and the actions in the forecast period is generated. However, extraction of actions in the pre-forecast period and extraction of actions in the forecast period may not be carried out at the same time. For example, extraction of actions in the pre-forecast period may be carried out in the pre-forecast period, and extraction of actions in the forecast period may be carried out in the forecast period. In this case, in each period, the suggestion information generator 14 generates suggestion information showing actions in that period, and displays the suggestion information on the display 15. As a result, the actions to be taken on a certain day can be viewed by the user on that day, so that the user is less likely to forget which action should be taken. Therefore, better promotion of actions can be expected.

Although the first to third embodiments have been described, those embodiments need not be carried out separately, and may be combined.

FIG. 12 is a diagram showing an example of the hardware configuration of the action suggestion devices according to the embodiments of the invention. The action suggestion device includes, as shown in FIG.12, a controller 41, a main storage 42, an external storage 43, an operation unit 44, a display 45, and a transmitter/receiver 46. The main storage 42, external storage 43, operation unit 44, display 45, and transmitter/receiver 46 are connected to the controller 41 via an internal bus 40.

The controller 41 includes a CPU (Central Processing Unit) or the like, and executes individual processes according to a control program 49 stored in the external storage 43. The controller 41 executes the processes of the forecast information acquisition unit 11, the remaining power acquisition unit 12, the suggestion information generator 14, the request acquisition unit 16, the determination unit 17 and the input device 19.

The main storage 42 includes a RAM (Random-Access Memory) or the like. The control program 49 stored in the external storage 43 is loaded into the main storage 42 which serves as a work area for the controller 41.

The external storage 43 includes a non-volatile memory such as a flash memory, hard disk, DVD-RAM (Digital Versatile Disc Radom-Access Memory), or DVD-RW (Digital Versatile Disc ReWritable), and previously stores programs for allowing the controller 41 to execute the processes of the action suggestion device. In response to an instruction from the controller 41, the external storage 43 supplies data stored in the program to the controller 41, and stores data supplied from the controller 41. The action list storage 13 and the user information storage 18 are configured in the external storage 43.

The operation unit 44 includes a pointing device or the like such as a keyboard and a mouse, and an interface unit which connects the keyboard and the mouse to the internal bus 40. When the user inputs information to the action suggestion device, an instruction is supplied to the controller 41 via the operation unit 44. The operation unit 44 functions as the input device 19.

The display 45 is constituted by a CRT (Cathode Ray Tube) or LCD (Liquid Crystal Display) or the like, and displays information supplied from the controller 41. The display 45 functions as the display 15.

The transmitter/receiver 46 includes a network termination unit to connect to a communication network, or a wireless communication device, and a serial interface or LAN (Local Area Network) interface which connects thereto. The transmitter/receiver 46 functions as the forecast information acquisition unit 11, the remaining power acquisition unit 12 and the request acquisition unit 16.

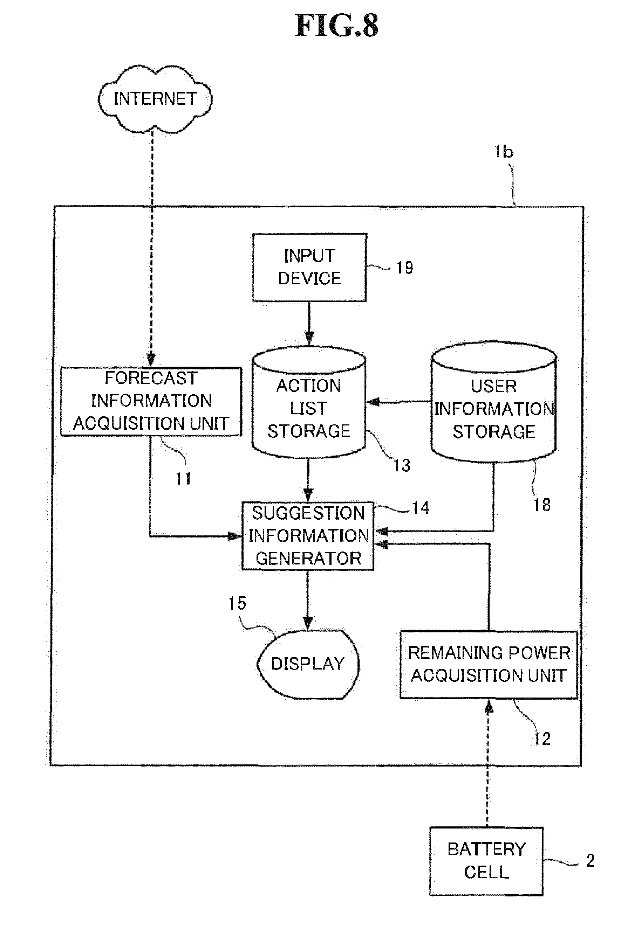

The processes of the forecast information acquisition unit 11, the remaining power acquisition unit 12, the suggestion information generator 14, the request acquisition unit 16, the determination unit 17, and the input device 19 shown in FIGS. 2, 5 and 8 are executed as the control program 49 performs processing using the controller 41, the main storage 42, the external storage 43, the operation unit 44, the display 45, and the transmitter/receiver 46 as resources.

In addition, the foregoing hardware configuration and the flowcharts are illustrative, and may be modified and corrected as needed.

The core part that includes the controller 41, the main storage 42, the external storage 43, the operation unit 44, and the internal bus 40 and executes the action suggestion process is not limited to a dedicated system, and may be achieved using an ordinary computer system. For example, the computer program for executing the above-described operation may be stored in a computer readable recording medium (flexible disk, CD-ROM, DVD-ROM or the like) for distribution, and installed on a computer to achieve the action suggestion system that executes the above-described processes. The computer program may be stored in a storage that the action suggestion device has on a communication network like the Internet, and may be downloaded onto an ordinary computer system to configure the action suggestion system.

When the functions of the action suggestion system are achieved by sharing of the OS (Operating System) and an application program, or the cooperation of the OS and the application program, the application program portion alone may be stored in the storage medium or the storage.

The computer program may be superimposed on a carrier wave and distributed over a communication network. For example, the computer program may be put on a bulletin board system (BBS) on a communication network, and distributed over the communication network. Then, the above-described processes can be executed by activating this computer program and running it like other application programs under control of the OS.

The embodiments can be partly or entirely described as set forth in the following claims, but are not restrictive.

(Note 1)

An action suggestion device including:

remaining power acquisition means that acquires an amount of remaining power in a battery cell storing power supplied by a power generator;
forecast acquisition means that acquires forecast information on an amount of power to be supplied to the battery cell by the power generator in a predetermined forecast period;
storage means that stores an action list recording actions of a user and information on power consumption originating from the actions in association with each other;
extraction means that extracts, from the action list, a combination of actions whose information on the power consumption satisfies a predetermined criterion which is based on the forecast information and the amount of remaining power as a suggested action in the forecast period and a pre-forecast period thereto;
generation means that generates suggestion information including the combination of actions extracted by the extraction means; and
output means that outputs the suggestion information generated by the generation means.

(Note 2)

The action suggestion device according to Note 1, wherein the power generator generates different amount of power depending on a weather, and
information acquired by the forecast acquisition means includes a weather forecast in the forecast period in the region where the power generator is located.

(Note 3)

The action suggestion device according to Note 1, further including request acquisition means that acquires a request on an amount of power to be used by the user, wherein
the extraction means extracts an action whose information on the power consumption satisfies the request and a predetermined criterion which is based on the forecast information and the amount of remaining power as the suggested action.

(Note 4)

The action suggestion device according to Note 3, further comprising:

record acquisition means that acquires data indicating a past record of the use of power by the user; and
determination means that determines whether the past record of the use of power by the user satisfies the request, wherein
the generation means generates warning information indicating that the request was not satisfied when the determination means determines that the request was not satisfied, and
the output means outputs the warning information.

(Note 5)

The action suggestion device according to any one of Notes 1 to 4, further including user information storage means that stores user information which indicates behavioral pattern including a frequency for the user to do the actions stored in the action list, wherein
the extraction means that further makes allowance for, as the predetermined evaluation criterion to extract the suggested action, whether the user information about the actions satisfies a predetermined condition.

(Note 6)

The action suggestion device according to any one of Notes 1 to 5, further including execution information acquisition means that acquires execution information indicating that the user has done the actions stored in the action list, wherein
the extraction means that further makes allowance for , as the predetermined evaluation criterion to extract the suggested action, whether the execution information about the actions satisfies a predetermined condition.

(Note 7)

An action suggestion system including:

a power generator that supplies generated power to a battery cell;
the battery cell that stores the power supplied by the power generator; and
an action suggestion device including

remaining power acquisition means that acquires an amount of remaining power in the battery cell,
forecast acquisition means that acquires forecast information on an amount of power to be supplied to the battery cell by the power generator in a predetermined forecast period,
storage means that stores an action list recording actions of a user and information on power consumption originating from the actions in association with each other,
extraction means that extracts, from the action list, a combination of actions whose information on the power consumption satisfies a predetermined criterion which is based on the forecast information and the amount of remaining power as a suggested action in the forecast period and a pre-forecast period thereto,
generation means that generates suggestion information including the combination of actions extracted by the extraction means, and
output means that outputs the suggestion information generated by the generation means.

(Note 8)

An action suggestion method for suggesting an action to a user, the method including the steps of:

acquiring an amount of remaining power in a battery cell storing power supplied by a power generator;
acquiring forecast information on an amount of power to be supplied to the battery cell by the power generator in a predetermined forecast period;
storing an action list recording actions of a user and information on power consumption originating from the actions in association with each other;
extracting, from the action list, a combination of actions whose information on the power consumption satisfies a predetermined criterion which is based on the forecast information and the value of the amount of remaining power as a suggested action in the forecast period and a pre-forecast period thereto;
generating suggestion information including the extracted combination of actions; and
outputting the generated suggestion information.

(Note 9)

A program allowing a computer to function as:

remaining power acquisition means that acquires an amount of remaining power in a battery cell storing power supplied by a power generator;
forecast acquisition means that acquires forecast information on an amount of power to be supplied to the battery cell by the power generator in a predetermined forecast period;

storage means that stores an action list recording actions of a user and information on power consumption originating from the actions in association with each other;

extraction means that extracts, from the action list, a combination of actions whose information on the power consumption satisfies a predetermined criterion which is based on the forecast information and the amount of remaining power as a suggested action in the forecast period and a pre-forecast period thereto;

generation means that generates suggestion information including the combination of actions extracted by the extraction means; and

output means that outputs the suggestion information generated by the generation means.

The invention is based on Japanese Patent Application No. 2011-142209 filed on June 27, 2011, the specification, claims and drawings of which are incorporated herein by reference in their entirety.

Industrial Applicability

The invention can be adapted to individual fields where a device capable of suggesting actions according to the power condition.

Reference Signs List

| | |
|---|---|
| 1, 1a, 1b | Action suggestion device |
| 2 | Battery cell |
| 3 | Power generator |
| 11 | Forecast information acquisition unit |
| 12 | Remaining power acquisition unit |
| 13 | Action list storage |
| 14 | Suggestion information generator |
| 15 | Display |
| 16 | Request acquisition unit |
| 17 | Determination unit |
| 18 | User information storage |
| 19 | Input device |
| 41 | Controller |
| 42 | Main storage |
| 43 | External storage |
| 44 | Operation unit |
| 43 | Display |
| 46 | Transmitter/receiver |
| 49 | Control program |
| 100 | Action suggestion system |

**Claims**

1.  An action suggestion device comprising:

remaining power acquisition means that acquires an amount of remaining power in a battery cell storing power supplied by a power generator;

forecast acquisition means that acquires forecast information on an amount of power to be supplied to the battery cell by the power generator in a predetermined forecast period;

storage means that stores an action list recording actions of a user and information on power consumption originating from the actions in association with each other;

extraction means that extracts, from the action list, a combination of actions whose information on the power consumption satisfies a predetermined criterion which is based on the forecast information and the amount of remaining power as a suggested action in the forecast period and a pre-forecast period thereto;

generation means that generates suggestion information including the combination of actions extracted by the extraction means; and
output means that outputs the suggestion information generated by the generation means.

2. The action suggestion device according to Claim 1, wherein the power generator generates different amount of power depending on a weather, and
information acquired by the forecast acquisition means includes a weather forecast in the forecast period in the region where the power generator is located.

3. The action suggestion device according to Claim 1, further comprising request acquisition means that acquires a request on an amount of power to be used by the user, wherein
the extraction means extracts an action whose information on the power consumption satisfies the request and a predetermined criterion which is based on the forecast information and the amount of remaining power as the suggested action.

4. The action suggestion device according to Claim 3, further comprising:

record acquisition means that acquires data indicating a past record of the use of power by the user; and
determination means that determines whether the past record of the use of power by the user satisfies the request, wherein
the generation means generates warning information indicating that the request was not satisfied when the determination means determines that the request was not satisfied, and
the output means outputs the warning information.

5. The action suggestion device according to any one of Claims 1 to 4, further comprising user information storage means that stores user information which indicates behavioral pattern including a frequency for the user to do the actions stored in the action list, wherein
the extraction means that further makes allowance for , as the predetermined evaluation criterion to extract the suggested action, whether the user information about the actions satisfies a predetermined condition.

6. The action suggestion device according to any one of Claims 1 to 5, further comprising execution information acquisition means that acquires execution information indicating that the user has done the actions stored in the action list, wherein
the extraction means that further makes allowance for, as the predetermined evaluation criterion to extract the suggested action" whether the execution information about the actions satisfies a predetermined condition.

7. An action suggestion system comprising:

a power generator that supplies generated power to a battery cell;
the battery cell that stores the power supplied by the power generator; and
an action suggestion device including

remaining power acquisition means that acquires an amount of remaining power in the battery cell,
forecast acquisition means that acquires forecast information on an amount of power to be supplied to the battery cell by the power generator in a predetermined forecast period,
storage means that stores an action list recording actions of a user and information on power consumption originating from the actions in association with each other,
extraction means that extracts, from the action list, a combination of actions whose information on the power consumption to satisfies a predetermined criterion which is based on the forecast information and the amount of remaining power as a suggested action in the forecast period and a pre-forecast period thereto,
generation means that generates suggestion information including the combination of actions extracted by the extraction means, and
output means that outputs the suggestion information generated by the generation means.

8. An action suggestion method for suggesting an action to a user, the method comprising the steps of:

acquiring an amount of remaining power in a battery cell storing power to be supplied by a power generator;
acquiring forecast information on an amount of power to be supplied to the battery cell by the power generator in a predetermined forecast period;

storing an action list recording actions of a user and information on power consumption originating from the actions in association with each other;

extracting, from the action list, a combination of actions whose information on the power consumption to satisfies a predetermined criterion which is based on the forecast information and the amount of remaining power as a suggested action in the forecast period and a pre-forecast period thereto;

generating suggestion information including the extracted combination of actions; and

outputting the generated suggestion information.

9.  A program allowing a computer to function as:

remaining power acquisition means that acquires an amount of remaining power in a battery cell storing power to be supplied by a power generator;

forecast acquisition means that acquires forecast information on an amount of power to be supplied to the battery cell by the power generator in a predetermined forecast period;

storage means that stores an action list recording actions of a user and information on power consumption originating from the actions in association with each other;

extraction means that extracts, from the action list, a combination of actions whose information on the power consumption satisfies a predetermined criterion which is based on the forecast information and the amount of remaining power as a suggested action in the forecast period and a pre-forecast period thereto;

generation means that generates suggestion information including the combination of actions extracted by the extraction means; and

output means that outputs the suggestion information generated by the generation means.

EP 2 725 527 A1

**FIG.1**

# FIG.2

INTERNET

1

FORECAST
INFORMATION
AQUISITION
UNIT

11

ACTION LIST
STORAGE

13

SUGGESTION
INFORMATION
GENERATOR

14

15

DISPLAY

REMAINING
POWER
ACQUISITION
UNIT

12

BATTERY
CELL

2

## FIG.3A

WEATHER FORECAST

| TOMMOROW'S WEATHER |
| --- |
| FINE |

# FIG.3B

| FORECAST INFORMATION | AMOUNT OF POWER GENERATION |
|---|---|
| FINE | LARGE |
| RAIN | SMALL |
| CLOUDY | SMALL |

# FIG.3C

AMOUNT OF REMAINING POWER            2.00kWh/10.00kWh

# FIG.3D

ACTION LIST

| ID | ACTION | CONSUMED OR NOT |
|----|--------|-----------------|
| 1 | COMMUTE BY ELECTRIC VEHICLE | ○ |
| 2 | COMMUTE BY ELECTRIC TRAIN | × |
| 3 | WASH LAUNDRY | ○ |
| 4 | VACUUM-CLEN | ○ |
| 5 | GO TO SHOPPING BY ELECTRIC VEHICLE | ○ |
| 6 | GO TO SHOPPING BY BICYCLE | × |
| 7 | WATCH DVD | ○ |
| 8 | CLEAN BATHTUB | × |
| 9 | SWEEP THE YARD | × |
| 10 | USE PC | ○ |
| ⋮ | ⋮ | ⋮ |

# FIG.4

```
           ┌──────────────────────────────┐
           │  ACTION SUGGESTION ROUTINE 1  │
           └──────────────────────────────┘
                          │
                          ▼
           ┌──────────────────────────────┐
           │  ACQUIRE FORECAST INFORMATION │  S11
           └──────────────────────────────┘
                          │
                          ▼
           ┌────────────────────────────────────┐
           │ ACQUIRE THE AMOUNT OF REMAINING POWER│  S12
           └────────────────────────────────────┘
                          │
                          ▼
                    ╱─────────╲           S13
                   ╱ LARGE AMOUNT OF ╲──────── NO
                   ╲ POWER GENERATION ? ╱
                    ╲─────────╱
                          │ YES
                          ▼
                    ╱─────────╲            S14
                   ╱ AMOUNT OF REMAINING POWER ╲──── NO
                   ╲  > THRESHOLD VALUE ?  ╱
                    ╲─────────╱
                          │ YES
                          ▼
           ┌──────────────────────────────┐
           │   EXTRACT SUGGESTED ACTIONS   │
           │     IN PRE-FORECAST PERIOD    │  S15
           │   (POWER CONSUMING ACTIONS)   │
           └──────────────────────────────┘
                          │
                          ▼
           ┌──────────────────────────────┐
           │   EXTRACT SUGGESTED ACTIONS   │
           │     IN FORECASST PERIOD       │  S16
           │   (POWER STORING ACTIONS)     │
           └──────────────────────────────┘
                          │
                          ▼
           ┌──────────────────────────────┐
           │ GENERATE SUGGESTION INFORMATION│  S17
           └──────────────────────────────┘
                          │
                          ▼
           ┌──────────────────────────────┐
           │ DISPLAY SUGGESTION INFORMATION │  S18
           └──────────────────────────────┘
                          │
                          ▼
                    ╱─────────╲           S19
            YES ───╱ FORECAST PERIOD ╲──── NO
                   ╲    PASSED?   ╱
                    ╲─────────╱
```

# FIG.5

INTERNET

FORECAST
INFORMATION
ACQUISITION UNIT

11

ACTION LIST
STORAGE

13

REQUEST
ACQUISITION
UNIT

16

1a

SUGGESTION
INFORMATION
GENERATOR

14

DISPLAY

15

REMAINING POWER
ACQUISITION UNIT

12

DETERMINATION
UNIT

17

BATTERY
CELL

2

## FIG.6A

WEATHER FORECAST

| SUNSHINE DURATION TOMORROW |
| :---: |
| 5.0 HOURS |

# FIG.6B

AMOUNT OF REMAINING POWER                    5.00kWh/10.00kWh

# FIG.6C

ACTION LIST

| ID | ACTION | ACTION-ORIGINATING POWER CONSUMPTION | NEEDED TIME |
|----|--------|--------------------------------------|-------------|
| 1 | COMMUTE BY ELECTRIC VEHICLE | 0.8kWh | 10 HOURS |
| 2 | COMMUTE BY ELECTRIC TRAIN | 0 | 10 HOURS |
| 3 | WASH LAUNDRY | 0.4kWh | 1 HOUR |
| 4 | VACUUM-CLEAN | 0.1kWh | 0.5 HOUR |
| 5 | GO TO SHOPPING BY ELECTRIC VEHICLE | 0.2kWh | 0.5 HOUR |
| 6 | GO TO SHOPPING BY BICYCLE | 0 | 0.6 HOUR |
| 7 | WATCH DVD | 0.6kWh | 2 HOURS |
| 8 | CLEAN BATHTUB | 0 | 0.2 HOUR |
| 9 | SWEEP THE YARD | 0 | 0.3 HOUR |
| 10 | USE PC | 0.2kWh | 1.5 HOUR |
| ⋮ | ⋮ | ⋮ | ⋮ |

# FIG.7

```
        ┌─────────────────────────────────┐
        │   ACTION SUGGESTING ROUTINE 2   │
        └─────────────────────────────────┘
                        │
        ┌─────────────────────────────────┐
        │        ACQUIRE REQUEST          │── S31
        └─────────────────────────────────┘
                        │
        ┌─────────────────────────────────┐
        │   ACQUIRE FORECAST INFORMATION  │── S32
        └─────────────────────────────────┘
                        │
   ┌──────────────────────────────────────────────────┐
   │ CALCULATE THE AMOUNT OF POWER GENERATION IN       │── S33
   │ REQUEST PERIOD                                    │
   └──────────────────────────────────────────────────┘
                        │
        ┌─────────────────────────────────┐
        │ ACQUIRE THE AMOUNT OF REMAINIG POWER │── S34
        └─────────────────────────────────┘
                        │
                     ╱  S35  ╲
          YES  ╱                 ╲  NO
       ◄──────  AMOUNT OF POWER GENERATION > X ?  ──────►
              ╲                 ╱
                ╲             ╱
```

AMOUNT OF POWER GENERATION > X ?  — S35

EXTRACT SUGGESTED ACTIONS IN PRE-REQUEST PERIOD (POWER CONSUMING ACTIONS) — S36

EXTRACT SUGGESTED ACTIONS IN PRE-REQUEST PERIOD (NON-POWER CONSUMING ACTIONS) — S38

EXTRACT SUGGESTED ACTIONS IN REQUEST PERIOD (POWER STORING AND REQUEST FULFILLING ACTIONS) — S37

EXTRACT SUGGESTED ACTIONS IN REQUEST PERIOD (POWER STORING AND REQUEST FULFILLING ACTIONS) — S39

GENERATE SUGGESTION INFORMATION — S40

DISPLAY SUGGESTION INFORMATION — S41

FORECAST PERIOD PASSED? — S42  YES

REQUEST PERIOD PASSED? — S43  NO

YES

ACQUIRE PAST RECORD OF USE OF POWER — S44

REQUEST FULFILLED? — S45  YES

NO

GENERATE WARNING INFORMATION — S46

DISPLAY WARNING INFORMATION — S47

END

# FIG.8

## FIG.9A

WEATHER FORECAST

| SUNSHINE DURATION TOMORROW(MONDAY) |
|---|
| 5.0 HOURS |

# FIG.9B

AMOUNT OF REMAINING POWER                    2.00kWh/10.00kWh

# FIG.9C

ACTION LIST

| ID | ACTION | ACTION-ORIGINATING POWER CONSUMPTION | NEEDED TIME | DO |
|---|---|---|---|---|
| 1 | COMMUTE BY ELECTRIC VEHICLE | 0.8kWh | 10 HOURS | |
| 2 | COMMUTE BY ELECTRIC TRAIN | 0 | 10 HOURS | |
| 3 | WASH LAUNDRY | 0.4kWh | 1 HOUR | ○ |
| 4 | VACUUM-CLEAN | 0.1kWh | 0.5 HOUR | |
| 5 | GO TO SHOPPING BY ELECTRIC VEHICLE | 0.2kWh | 0.5 HOUR | ○ |
| 6 | GO TO SHOPPING BY BICYCLE | 0 | 0.6 HOUR | |
| 7 | WATCH DVD | 0.6kWh | 2 HOURS | |
| 8 | CLEAN BATHTUB | 0 | 0.2 HOUR | |
| 9 | SWEEP THE YARD | 0 | 0.3 HOUR | ○ |
| 10 | USE PC | 0.2kWh | 1.5 HOUR | |
| ⋮ | ⋮ | ⋮ | ⋮ | ⋮ |

# FIG.9D

USER INFORMATION

| ID | WEEKDAY/WEEKEND | ACTION | FREQUENCY |
|---|---|---|---|
| 1 | WEEKDAY | COMMUTE BY ELECTRIC VEHICLE | EVERYDAY |
| 2 | WEEKDAY | COMMUTE BY ELECTRIC TRAIN | EVERYDAY |
| 3 | WEEKDAY/WEEKEND | WASH LAUNDRY | EVERYDAY |
| 4 | WEEKDAY/WEEKEND | VACUUM-CLEAN | EVERY TWO DAYS |
| 5 | WEEKEND | GO TO SHOPPING BY ELECTRIC VEHICLE | ONCE A WEEK |
| 6 | WEEKDAY | GO TO SHOPPING BY BICYCLE | EVERY THREE DAYS |
| 7 | WEEKEND | WATCH DVD | ONCE A WEEK |
| 8 | WEEKDAY/WEEKEND | CLEAN BATHTUB | EVERYDAY |
| 9 | WEEKEND | SWEEP THE YARD | ONCE A MONTH |
| 10 | WEEKDAY/WEEKEND | USE PC | EVERYDAY |
| ⋮ | ⋮ | ⋮ | ⋮ |

# FIG.10

# FIG.11

1

41 CONTROLLER

42 MAIN STORAGE

43 EXTERNAL STORAGE

49

49

40 INTERNAL BUS

44 OPERATION UNIT

45 DISPLAY

46 TRANSMITTER /RECIVER

COMMUNICATION NETWORK

## INTERNATIONAL SEARCH REPORT

| International application No. |
| --- |
| PCT/JP2012/066086 |

**A. CLASSIFICATION OF SUBJECT MATTER**
*G06Q10/00(2012.01)i, G06Q50/06(2012.01)i, G06Q50/10(2012.01)i*

According to International Patent Classification (IPC) or to both national classification and IPC

**B. FIELDS SEARCHED**

Minimum documentation searched (classification system followed by classification symbols)
G06Q10/00, G06Q50/06, G06Q50/10

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2011-85273 A (Panasonic Corp.), 28 April 2011 (28.04.2011), paragraphs [0027], [0028] (Family: none) | 1-9 |
| A | JP 2011-61992 A (Panasonic Electric Works Co., Ltd.), 24 March 2011 (24.03.2011), entire text; all drawings (Family: none) | 1-9 |
| A | JP 2005-266873 A (Osaka Gas Co., Ltd.), 29 September 2005 (29.09.2005), entire text; all drawings (Family: none) | 1-9 |

☒ Further documents are listed in the continuation of Box C.   ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 September, 2012 (06.09.12) | 18 September, 2012 (18.09.12) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

| International application No. |
|---|
| PCT/JP2012/066086 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2009-225842 A  (Omron Healthcare Co., Ltd.),<br>08 October 2009 (08.10.2009),<br>entire text; all drawings<br>(Family: none) | 1-9 |
| A | JP 2010-176373 A  (E & E Planning Corp.),<br>12 August 2010 (12.08.2010),<br>entire text; all drawings<br>(Family: none) | 1-9 |
| A | JP 2007-257284 A  (Asahi Kasei Homes Corp.),<br>04 October 2007 (04.10.2007),<br>entire text; all drawings<br>(Family: none) | 1-9 |
| A | JP 2011-92002 A  (Panasonic Corp.),<br>06 May 2011 (06.05.2011),<br>paragraph [0024]<br>(Family: none) | 1-9 |
| A | JP 2011-66956 A  (Mitsubishi Electric Corp.),<br>31 March 2011 (31.03.2011),<br>entire text; all drawings<br>(Family: none) | 1-9 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008217621 A
- JP H10305016 B
- JP 2009116844 A

- JP 2010146276 A
- JP 2010204883 A
- JP 2011142209 A